# EUROPÄISCHE PATENTSCHRIFT

(11) **EP 3 729 952 B1**
(45) Veröffentlichungstag und Bekanntmachung des Hinweises auf die Patenterteilung: **21.06.2023**
(21) Anmeldenummer: 20168459.4
(22) Anmeldetag: 07.04.2020
(51) Int. Cl.: A01F 15/08, A01F 15/07

(54) **BALLENWICKELVORRICHTUNG FÜR EINE RUNDBALLENPRESSE, RUNDBALLENPRESSE UND VERFAHREN ZUM BETREIBEN EINER RUNDBALLENPRESSE**
BALE WRAPPING DEVICE FOR A ROUND-BALE PRESS, ROUND-BALE PRESS AND METHOD FOR OPERATING THE SAME
DISPOSITIF D'ENROULEMENT DE BALLES POUR UNE PRESSE À BALLES RONDES, PRESSE À BALLES RONDES ET PROCÉDÉ DE FONCTIONNEMENT D'UNE PRESSE À BALLES RONDES

(30) Priorität: 12.04.2019 DE 102019205330
(43) Veröffentlichungstag der Anmeldung: 28.10.2020
(73) Patentinhaber: Deere & Company, Moline, IL 61265 (US)
(72) Erfinder: LEBEAU, Jonathan, 68163 Mannheim (DE); GRESSET, Pascal, 68163 Mannheim (DE); PERROTIN, Frederic, 68163 Mannheim (DE)
(74) Vertreter: Stein, Stefan

(56) Entgegenhaltungen:
- EP-A1- 2 835 046
- EP-A1- 3 300 586
- DE-U1-202016 000 568

## Beschreibung

Die Erfindung betrifft eine Ballenwickelvorrichtung gemäss dem Oberbegriff des unabhängigen Anspruchs 1, eine Rundballenpresse mit einer Ballenwickelvorrichtung gemäss dem Oberbegriff des unabhängigen Anspruchs 8 und ein Verfahren zum Betreiben einer Rundballenpresse mit einer Ballenwickelvorrichtung gemäss dem Oberbegriff des unabhängigen Anspruchs 9.

Rundballenpressen sind bekannt. Ferner ist es bekannt, Rundballenpressen mit einer Ballenwickelvorrichtung auszurüsten, wodurch ein gepresster Ballen mit einem Umwicklungsmaterial umwickelt wird und im Anschluss daran in gewickelter Form ausgeworfen werden kann. Der Ballen wird in einer Presskammer der Rundballenpresse, insbesondere einer zylindrischen Presskammer, während einer Ballenbildungsphase in Form gebracht. Dazu wird auf dem Boden liegendes Erntegut von einer Erntegutaufnahmeeinrichtung in die Presskammer gefördert und durch angeordnete Pressmittel ein zylindrischer Ballen, auch Rundballen genannt, geformt. Die Presskammer kann als feste Presskammer, mit zylindrisch angeordneten Presswalzen, oder auch als variable Presskammer, mit variablen Pressmitteln, beispielsweise Pressriemen oder Pressketten, ausgebildet sein.

In einer der Ballenbildungsphase folgenden Einführungsphase, wird von einer Umwicklungsmaterialrolle ein Umwicklungsmaterial in Richtung des mittlerweile ausgeformten Rundballens in die Presskammer geführt und von der Außenseite des Ballens mitgerissen. Als Umwicklungsmaterial wird, üblicherweise Netz, Folie oder Garn verwendet. Durch den sich drehenden Ballen wird das Umwicklungsmaterial in einer Wickelphase um den Ballen geführt. Es folgt eine Trennphase, in der das Umwicklungsmaterial durch eine Trenneinrichtung vom Ballen getrennt wird, bevor der Ballen in der Ballenauswurfphase ausgeworfen bzw. auf den Boden abgelegt wird. Es hat sich als problematisch herausgestellt, die Geschwindigkeit der Umwicklungsmaterialrolle den einzelnen Phasen anzupassen, insbesondere dabei auch eine gewisse Bremskraft auf die Umwicklungsmaterialrolle wirken zu lassen, sodass insbesondere für die Trennphase eine optimale Straffung und/oder Entlastung und/oder Spannung des Umwicklungsmaterials vorliegt. Infolgedessen kann es zu Verwicklungen des Umwicklungsmaterials mit den Pressmitteln oder auch zu fehlerhaften Umwicklungsmaterialtrennungen kommen, was den Ballenpressprozess unter Umständen stören oder gar unterbrechen würde. Ausserdem kann, wenn eine nicht angepassten Bremskraft auf die Umwicklungsmaterialrolle wirkt, das Umwicklungsmaterial beschädigt werden, was vermieden werden muss.

Die EP 3 300 586 A1 offenbart eine Ballenpresse mit einer Bindevorrichtung mit einer Bremseinheit zum Spannen und/oder Klemmen des Bindemittels. Die DE 20 2016 000568 U1 offenbart eine Ballenpresse mit einer Wickelvorrichtung die eine Bremsvorrichtung zum Einstellen einer Wickelmaterialspannung umfasst.

Ausgehend von diesem Stand der Technik ist es daher eine Aufgabe der vorliegenden Erfindung eine Ballenwickelvorrichtung, eine Rundballenpresse und ein Verfahren zum Betrieb einer Rundballenpresse vorzuschlagen, die die aus dem Stand der Technik bekannten Nachteile weitgehend vermeiden, insbesondere eine Ballenwickelvorrichtung, eine Rundballenpresse und ein Verfahren zum Betreiben einer Rundballenpresse vorzuschlagen, die mit einer optimierbaren Straffung und/oder Entlastung und/oder Spannung des Umwicklungsmaterials betreibbar sind.

Diese Aufgabe wird durch eine Ballenwickelvorrichtung für eine Rundballenpresse mit den Merkmalen des Anspruchs 1, eine Rundballenpresse mit den Merkmalen des Anspruchs 8 und einem Verfahren zum Betreiben einer Rundballenpresse mit den Merkmalen des Anspruchs 9 gelöst.

Die abhängigen Ansprüche beziehen sich auf besonders vorteilhafte Ausführungsformen der Erfindung.

Erfindungsgemäß wird eine Ballenwickelvorrichtung für eine Rundballenpresse vorgeschlagen, bevorzugt zur Umhüllung eines Rundballens mit einem Umwicklungsmaterial. Die Ballenwickelvorrichtung umfasst eine Umwicklungsmaterialrolle mit dem Umwicklungsmaterial und eine Bremsrolle, wobei die Umwicklungsmaterialrolle mit einer Bremsrolle in Eingriff bringbar ist. Ausserdem weist die Ballenwickelvorrichtung eine Trenneinrichtung zum Abtrennen des Umwicklungsmaterials von der Umwicklungsmaterialrolle auf. Im Weiteren ist eine Bremseinrichtung vorgesehen, die mit der Bremsrolle zusammenwirkt. Die Bremseinrichtung ist mittels der Trenneinrichtung derart betätigbar, dass eine Drehbewegung der Bremsrolle mit der Bremseinrichtung bremsbar ist, und insbesondere eine Drehbewegung der mit der Bremsrolle in Eingriff stehenden Umwicklungsmaterialrolle mit der Bremsrolle bremsbar ist.

Das Umwicklungsmaterial kann als eine Folie ausgebildet sein, insbesondere eine Kunststofffolie oder eine Folie aus Kunststoff sein oder eine Kunststoff umfassende Folie oder eine mit Kunststoff beschichtete Folie sein. Das Umwicklungsmaterial kann auch eine Mehrschichtverbundfolie aus einer Kombination unterschiedlicher Kunststoffe sein. Die mechanische Belastbarkeit kann durch Armieren mit Glasfasern oder Einbringung eines Geflechtes erhöht worden sein.

Die Bremsrolle kann mit der Umwicklungsmaterialrolle in Eingriff stehen und/oder kann mit dieser in einem Reibschluss stehen. Über die Bremseinrichtung kann ein auf die Bremsrolle wirkendes Bremsmoment variabel eingeleitet werden. Die Betätigung der Bremseinrichtung kann dabei an eine Betätigung der Trenneinrichtung gekoppelt sein, insbesondere mit dieser synchronisiert sein. Daraus ergeben sich unterschiedliche Bremsmomente bzw. Drehzahlen bzw. Drehgeschwindigkeiten, insbesondere zumindest zwei unterschiedliche Bremsmomente, für eine mit der Bremsrolle in Eingriff stehende Umwicklungsmaterialrolle, wodurch unterschiedliche Zustände der Straffung und/oder Entlastung und/oder Spannung des Umwicklungsmaterials beim Abrollen des Umwicklungsmaterials von der Umwicklungsmaterialrolle erzielbar sind. Im Speziellen kann, wenn die Bremsrolle mit der Umwicklungsmaterialrolle in Eingriff steht, ein derartiges Bremsmoment bewirkt werden, dass eine Drehbewegung bzw. eine Drehung der Umwicklungsmaterialrolle gebremst, bevorzugt gestoppt und/oder blockiert wird.

Die Rundballenpresse, insbesondere die Ballenwickelvorrichtung, kann ausserdem zusätzlich eine weitere Umwicklungsmaterialrolle mit einem Garn oder einer Folie einer anderen Art oder einem Netz als weiteres Umwicklungsmaterial umfassen. Die Folie der anderen Art kann insbesondere eine Kunststofffolie oder eine Folie aus Kunststoff sein oder eine Kunststoff umfassende Folie oder eine mit Kunststoff beschichtete Folie sein und/oder Mehrschichtverbundfolie aus einer Kombination unterschiedlicher Kunststoffe sein. Die mechanische Belastbarkeit kann durch Armieren mit Glasfasern oder Einbringung eines Geflechtes erhöht worden sein. Die Umwicklungsmaterialrolle kann in einem ersten Kompartiment und die weitere Umwicklungsmaterialrolle kann in einem zweiten Kompartiment der Rundballenpresse, insbesondere der Ballenwickelvorrichtung, angeordnet sein. Das erste und zweite Kompartiment können voneinander beabstandet oder benachbart zueinander sein. Das Umwicklungsmaterial und das weitere Umwicklungsmaterial können der Presskammer gleichzeitig zuführbar sein, bevorzugt kann jedoch entweder das Umwicklungsmaterial oder das weitere Umwicklungsmaterial der Presskammer zuführbar sein. Die Trenneinrichtung kann eine Messeranordnung umfassen. Die Messeranordnung kann beispielsweise ein Messer, insbesondere eine scharfe Kante sein, welches selbst in der Lage ist das Umwicklungsmaterial von der Umwicklungsmaterialrolle und/oder das weitere Umwicklungsmaterial von der weiteren Umwicklungsmaterialrolle zu trennen, d.h. zu schneiden oder zu reißen, oder das Messer kann mit einem Gegenmesser interagieren, um einen Schereffekt zu erzeugen.

Wesentlich für die Erfindung ist, dass mittels der Bremseinrichtung eine Kopplung der Trenneinrichtung, bevorzugt eine Kopplung einer Bewegung der Trenneinrichtung, die besonders bevorzugt auch eine Bewegung einer Messeranordnung oder eines Aktuators der Trenneinrichtung umfasst, an die Drehbewegung der Bremsrolle bzw. der Umwicklungsmaterialrolle bewirkt wird. Dazu kann die Trenneinrichtung mit der Bremseinrichtung verbunden bzw. können diese aneinander befestigt sein. Durch die Betätigung der Bremseinrichtung mittels der Trenneinrichtung kann eine Wechselwirkung, insbesondere eine Bremswirkung, zwischen der Bremsrolle und der Bremseinrichtung erzeugt werden. Dabei kann die Drehbewegung der Umwicklungsmaterialrolle gebremst, insbesondere gestoppt und/oder blockiert werden. Unter Betätigung der Bremseinrichtung mittels der Trenneinrichtung kann hierbei verstanden werden, dass die Trenneinrichtung eine Kraft auf die Bremseinrichtung ausübt, sodass die Bremseinrichtung verschwenkt und/oder translatorisch bewegt wird. Im Speziellen kann die Bremseinrichtung um einen Drehpunkt der Bremseinrichtung verschwenkbar gelagert sein, sodass bei einer Betätigung der Bremseinrichtung durch die Trenneinrichtung die Bremseinrichtung derart verschwenkt wird, dass ein Bremsen, insbesondere Stoppen und/oder Blockieren, der Drehbewegung der Bremsrolle mit der Bremseinrichtung bewirkt wird, wodurch auch die Drehbewegung der mit der Bremsrolle in Eingriff stehenden Umwicklungsmaterialrolle mit der Bremsrolle gebremst, insbesondere auch gestoppt und/oder blockiert wird. Im Speziellen kann die Bremseinrichtung mittels der Trenneinrichtung zwischen einer aktiven Bremsposition, in der eine Drehbewegung der Bremsrolle mit der Bremseinrichtung bremsbar ist, insbesondere auch eine Drehbewegung der mit der Bremsrolle in Eingriff stehenden Umwicklungsmaterialrolle bremsbar ist, und einer inaktiven Bremsposition bewegt werden bzw. verschwenkt werden, in der die Bremsrolle frei drehbar bzw. freilaufend ist, insbesondere nicht in Eingriff mit der Bremseinrichtung steht. Somit kann mittels der Bremseinrichtung eine Kopplung, insbesondere Synchronisation, der Trenneinrichtung an die bzw. mit der Drehbewegung der Bremsrolle bzw. Umwicklungsmaterialrolle bewirkt werden, derart, dass das Stoppen der Drehbewegung der Umwicklungsmaterialrolle gleichzeitig mit einer Bewegung der Trenneinrichtung, insbesondere der Messeranordnung und/oder dem Schneiden des Umwicklungsmaterials erfolgt. Mit anderen Worten, die Drehbewegung der Bremsrolle bzw. der Umwicklungsmaterialrolle kann mittels der Bremseinrichtung mit der Trenneinrichtung, insbesondere einer Bewegung der Trenneinrichtung synchronisiert werden. Vorteilhafterweise können aufgrund der Synchronisation der Drehbewegung der Bremsrolle bzw. der

Umwicklungsmaterialrolle mit der Trenneinrichtung Probleme beim Abwickeln des Umwicklungsmaterials vermieden werden. Von Vorteil kann so eine Entlastung und/oder Straffung und/oder Spannung des Umwicklungsmaterials erreicht werden, insbesondere in Abhängigkeit von der Synchronisation der Betätigung der Bremseinrichtung mit der Betätigung der Trenneinrichtung. Darüber hinaus kann so vorteilhafterweise eine Beschädigung und/oder ein Zerreisen des Umwicklungsmaterials vermieden werden. Ebenso kann beispielsweise das Mass der Bremsung der Umwicklungsmaterialrolle durch die Bremsrolle eingestellt werden.

In Ausgestaltung der Erfindung ist die Trenneinrichtung zwischen mindestens einer aktiven Trennposition und einer inaktiven Trennposition bewegbar. Die Bremseinrichtung ist dann mittels der Trenneinrichtung derart betätigbar, insbesondere verschwenkbar, dass eine Drehbewegung der Bremsrolle mit der Bremseinrichtung bremsbar ist, wenn die Trenneinrichtung in der aktiven Trennposition ist. Mit anderen Worten, die Kopplung der Trenneinrichtung und der Bremseinrichtung kann also wie folgt beschreiben werden. Bei einer Bewegung der Trenneinrichtung von der inaktive Trennposition in die aktiven Trennposition, betätigt, insbesondere verschwenkt, die Trenneinrichtung die Bremseinrichtung von der inaktiven Bremsposition in die aktive Bremsposition, sodass eine Drehbewegung der Bremsrolle mit der Bremseinrichtung bremsbar ist. Bei einer Bewegung der Trenneinrichtung von der aktive Trennposition in die inaktive Trennposition, betätigt, insbesondere verschwenkt, die Trenneinrichtung die Bremseinrichtung von der aktiven Bremsposition in die inaktive Bremsposition, sodass die Bremsrolle freilaufend ist. Die Drehbewegung der Bremsrolle kann also mit der Bremseinrichtung gebremst, wenn die Trenneinrichtung in der aktiven Trennposition ist, und die Drehbewegung der Bremsrolle ist mit der Bremseinrichtung nicht bremsbar, wenn die Trenneinrichtung in der inaktiven Trennposition ist. Die Trenneinrichtung kann in Abhängigkeit von Betriebsphasen der Rundballenpresse zwischen der aktiven Trennposition und der inaktiven Trennposition bewegbar sein. Im Speziellen umfassen die Betriebsphasen wenigstens die Trennphase, in der die Trenneinrichtung die aktive Trennposition einnimmt, und eine Einführungsphase und eine Wickelphase, in der die Trenneinrichtung die inaktive Trennposition einnimmt. Die Trenneinrichtung kann insbesondere auch in der Ballenbildungsphase die inaktive Trennposition einnehmen. Dadurch kann vorteilhafterweise die Betätigung bzw. Bewegung der Trenneinrichtung mit der Drehbewegung der Bremsrolle bzw. der Umwicklungsmaterialrolle synchronisiert werden, insbesondere kann die Drehbewegung der Bremsrolle bzw. der Umwicklungsrolle in der Trennphase, beispielsweise gleichzeitig mit der Bewegung der Messeranordnung und dem Schneiden der Folie, gebremst, insbesondere blockiert und/oder gestoppt werden.

In Ausgestaltung der Erfindung umfasst die Bremsrolle eine Bremskupplung, die drehfest mit der Bremsrolle verbunden ist. Die Bremseinrichtung umfasst weiter einen Bremshebel, insbesondere einen betätigbaren Bremshebel, der mit der Trenneinrichtung verbunden. Der Bremshebel ist mittels der Trenneinrichtung derart betätigbar, dass die Bremskupplung mittels der Bremseinrichtung, insbesondere mittels des Bremshebels, bremsbar ist. Die Bremskupplung kann beispielsweise eine Scheibe oder eine Trommel sein. Die Bremskupplung kann als Teil der Bremsrolle ausgebildet sein oder mit der Bremsrolle drehfest verbunden, insbesondere an dieser befestigt sein. Der Bremshebel kann ein erstes und ein zweites Ende umfassen. Die Trenneinrichtung, insbesondere die Messeranordnung und/oder ein Aktuator der Trenneinrichtung, kann mit dem zweiten Ende des Bremshebels verbunden sein. Der Bremshebel kann um den Drehpunkt der Bremseinrichtung schwenkbar an der Rundballenpresse gelagert sein, beispielsweise an der Ballenwickelvorrichtung und/oder dem Rahmen und/oder einer Seitenwand der Rundballenpresse. Der Bremshebel kann also mittels der Trenneinrichtung in die aktive Bremsposition bewegt werden, wenn die Trenneinrichtung die aktive Trennposition einnimmt bzw. bewegt wird. Der Bremshebel kann mittels der Trenneinrichtung in die inaktive Bremsposition bewegt werden, wenn die Trenneinrichtung die inaktive Trennposition einnimmt bzw. bewegt wird. Im Speziellen kann also der Bremshebel mittels der Trenneinrichtung derart betätigbar sein, dass die Drehbewegung der Bremsrolle mit der Bremseinrichtung gebremst, insbesondere gestoppt und/oder blockiert wird, wenn die Trenneinrichtung in der aktiven Trennposition ist, und die Bremsrolle frei drehbar ist, wenn die Trenneinrichtung in der inaktiven Trennposition ist.

In Ausgestaltung der Erfindung umfasst die Bremskupplung mindestens ein Betätigungselement. An einem ersten Ende des Bremshebels ist ein Bremselement vorgesehen, mit dem das Betätigungselement ergreifbar ist. Der Bremshebel ist dabei mittels der Trenneinrichtung derart betätigbar, insbesondere verschwenkbar, dass das Bremselement an dem Betätigungselement anliegt, insbesondere auch ergreift, wodurch eine Drehbewegung der Bremskupplung gebremst, insbesondere auch gestoppt und/oder blockiert werden kann. Darüber hinaus kann somit auch eine Drehbewegung der Bremsrolle und der mit der Bremsrolle in Eingriff stehenden Umwicklungsmaterialrolle gebremst, insbesondere auch gestoppt und/oder blockiert werden. Das Betätigungselement kann ein Anschlag oder ein Mitnehmer oder eine Nase oder dergleichen sein. Das Betätigungselement kann auch eine Nut oder eine Kerbe am Umfang der Bremskupplung sein. Das Betätigungselement kann radial aus Bremskupplung hervorstehen und/oder radial in die Bremskupplung hineinragen. Das Bremselement kann ein Anschlag oder ein Ritzel sein. Das Bremselement kann mit dem Bremshebel einstückig ausgebildet sein, insbesondere am ersten Ende des Bremshebels als ein Teil des Bremshebels ausgebildet sein. Ebenso können der Bremshebel und das Bremselement zweistückig, also als zwei separate Bauteile ausgebildet sein und das Bremselement kann mit dem Bremshebel verbunden, insbesondere an diesem lösbar befestigt sein, bevorzugt am am ersten Ende des Bremshebels. Das Bremselement kann am Betätigungselement anliegen, um die Drehbewegung der Bremskupplung und somit der Bremsrolle zu bremsen, insbesondere zu stoppen und/oder zu blockieren. Im Speziellen kann die Bremskupplung mehrere Betätigungselemente, insbesondere zwei oder drei, aufweisen. Die Betätigungselemente können gleichmäßig auf dem Umfang der Bremskupplung verteilt sein. Im Speziellen kann also der Bremshebel mittels der Trenneinrichtung derart betätigbar sein, dass das Bremselement an dem Betätigungselement anliegt und die Drehbewegung der Bremsrolle gebremst, insbesondere gestoppt und/oder blockiert wird, wenn die Trenneinrichtung in der aktiven Trennposition ist, und das Bremselement nicht an dem Betätigungselement anliegt, wenn die Trenneinrichtung in der inaktiven Trennposition ist. Durch diese Massnahme werden die oben genannten Vorteile erreicht.

In Ausgestaltung der Erfindung umfasst die Ballenwickelvorrichtung, insbesondere die Trenneinrichtung, einen Aktuator und die Bremseinrichtung ist mittels des Aktuators betätigbar. Bevorzugt kann der Aktuator mit einem zweiten Ende des Bremshebels verbunden, insbesondere wirkverbunden und/oder gekoppelt sein, wobei der Bremshebel mittels des Aktuators betätigbar ist. Der Aktuator kann direkt mit der Bremseinrichtung verbunden sein oder indirekt über die Messeranordnung oder ein Verbindungselement mit der Bremseinrichtung, insbesondere dem zweiten Ende des Bremshebels, verbunden, bevorzugt wirkverbunden und/oder gekoppelt sein. Bei einer Betätigung der Bremseinrichtung mittels der Trenneinrichtung kann der Aktuator eine Kraft auf die Bremseinrichtung, insbesondere den Bremshebel, ausüben, sodass dieser/diese verschwenkt und/oder translatorisch bewegt wird, insbesondere um einen Drehpunkt verschwenkt wird. Der Aktuator kann zwischen mindestens der aktiven Trennposition und der inaktiven Trennposition bewegbar sein. Der Bremshebel kann mittels des Aktuators insbesondere in Abhängigkeit von den Betriebsphasen der Rundballenpresse betätigbar sein, wobei die Betriebsphasen wenigstens eine Einführungsphase, eine Wickelphase und eine Trennphase umfassen. Der Bremshebel kann mittels des Aktuators in Abhängigkeit von Betriebsphasen der Rundballenpresse zwischen mindestens einer aktiven Bremsposition und einer inaktiven Bremsposition bewegbar sein. Der Aktuator kann in der Trennphase die aktive Trennposition einnehmen bzw. in die aktive Trennposition bewegt werden. Im Weiteren kann der Aktuator in der Einführungsphase und der Wickelphase die inaktive Trennposition einnehmen bzw. in die inaktive Trennposition bewegt werden.

Es können mindestens ein, aber auch zwei, drei, vier oder mehrere Aktuatoren vorgesehen sein. Der Aktuator kann als Hydraulikzylinder ausgebildet sein. Es ist jedoch auch denkbar eine andere, beispielsweise elektrische, mechanische oder pneumatische Betätigungsart, insbesondere eines Zylinders zu wählen. So kann der Aktuator auch als Elektromotor, beispielsweise Spindelmotor, ausgebildet sein. Auch eine entsprechende Anordnung mit einem Seilzug ist denkbar, um die Betätigung rein mechanisch zu gestalten. Der Aktuator kann beispielsweise vorgesehen sein, um die Trenneinrichtung bzw. die Messeranordnung zu verschwenken und/oder translatorisch zu bewegen. Die Trenneinrichtung bzw. die Messeranordnung kann dabei in der aktiven Trennposition mit dem Umwicklungsmaterial zusammenwirken, um dieses abzutrennen bzw. abzuschneiden. Die Bremseinrichtung kann ausserdem ein Rückstellelement umfassen, beispielsweise eine Feder. Das Rückstellelement kann mit dem Bremshebel verbunden sein bzw. beispielsweise zusätzlich auch mit dem Rahmen oder einer Seitenwand der Rundballenpresse oder der Ballenwickelvorrichtung verbunden sein. Der Bremshebel kann mit dem Rückstellelement derart betätigbar sein, dass eine Federkraft am Bremshebel anliegt, die entweder bewirkt, dass der Bremshebel in der aktiven oder der inaktiven Bremsposition gehalten und/oder in diese bewegt wird. Der Bremshebel kann mittels des Aktuators in die aktive Bremsposition bewegt werden, wenn der Aktuator die aktive Trennposition einnimmt bzw. in die aktive Trennposition bewegt wird. Der Bremshebel kann mittels des Aktuators auch in die inaktive Bremsposition bewegt werden, wenn der Aktuator die inaktive Trennposition einnimmt bzw. in die inaktive Trennposition bewegt wird. Im Speziellen kann also der Bremshebel mittels des Aktuators derart betätigbar sein, dass die Drehbewegung der Bremsrolle mit der Bremseinrichtung gebremst wird, insbesondere das Bremselement an dem Betätigungselement anliegt, wenn der Aktuator in der aktiven Trennposition ist, und die Drehbewegung der Bremsrolle mit der Bremseinrichtung nicht wechselwirkt, insbesondere das Bremselement nicht an dem Betätigungselement anliegt, wenn der Aktuator in der inaktiven Trennposition ist. Eine derartige Ausgestaltung ist insbesondere einfach in der konstruktiven Ausgestaltung bzw. Ausführung und sicher in der Wirkung. Ausserdem kann aufgrund dieser Massnahme in der Trennphase, der Aktuator in die aktive Trennposition bewegt werden, insbesondere um die Messeranordnung zu bewegen und das Umwicklungsmaterial zu schneiden, und damit vorteilhafterweise gleichzeitig die Drehung der Umwicklungsmaterialrolle gebremst, insbesondere gestoppt und/oder blockiert werden, um Probleme beim Abwickeln des Umwicklungsmaterials zu vermeiden.

In Ausgestaltung der Erfindung umfasst die Ballenwickelvorrichtung eine Antriebsrolle. Die Antriebsrolle ist mit einer Antriebseinrichtung verbunden, insbesondere drehfest verbunden. Die Antriebseinrichtung kann mit einem variabel spannbaren Antriebsriemen und/oder mit einem variabel spannbaren Bremsriemen in Verbindung stehen. Die Antriebseinrichtung kann mit Antriebsmitteln verbunden sein, sodass die Antriebsrolle mittels der Antriebseinrichtung antreibbar ist, insbesondere drehbar ist. Im Speziellen kann der Antriebsriemen eingangsseitig mit einer Riemenantriebsrolle in Eingriff stehen, wobei letztere mit den Antriebsmitteln verbunden ist. Als Antriebsmittel können angetriebene Bauteile, insbesondere direkt oder indirekt angetriebene Presswalzen der Rundballenpresse dienen, derart, dass beispielsweise die Riemenantriebsrolle drehfest mit einer der Presswalzen verbunden ist. Denkbar ist es hier auch einen separaten Antrieb, also einen von den Presswalzen getrennten Antrieb für die Riemenantriebsrolle zu wählen, beispielsweise einen Elektromotor, der in Abhängigkeit verschiedener Betriebsphasen einer Rundballenpresse, insbesondere in der Einführungsphase und/oder der Wickelphase und/oder der Trennphase, ansteuerbar ist. Die Ballenwickelvorrichtung kann die weitere Umwicklungsmaterialrolle umfassen, wobei die weitere Umwicklungsmaterialrolle mit der Antriebsrolle in Eingriff bringbar ist bzw. in einem Betriebszustand in Eingriff steht. Die Antriebsrolle und die Umwicklungsmaterialrolle hingegen können zueinander beabstandet sein. Im Speziellen können die Antriebsrolle und die Umwicklungsmaterialrolle derart zueinander beabstandet sein, dass diese nicht miteinander in Eingriff bringbar sind. Das Umwicklungsmaterial als solches, also das abgerollte Umwicklungsmaterial, ist mit der Antriebsrolle in Eingriff bringbar, sodass die Umwicklungsmaterialrolle mittels des mit der Antriebsrolle in Eingriff stehenden Umwicklungsmaterials indirekt antreibbar ist, indem das Umwicklungsmaterial mittels der Antriebsrolle abrollbar ist, und in die Presskammer führbar ist. Die Umwicklungsmaterialrolle kann also mittels der Antriebsrolle antreibbar sein, indem das Umwicklungsmaterial abgerollt wird. Die weitere Umwicklungsmaterialrolle kann mittels der Antriebsrolle antreibbar sein, insbesondere auch das weitere Umwicklungsmaterial mittels der Antriebsrolle abrollbar sein, sodass das weitere Umwicklungsmaterial abgegeben wird und in die Presskammer führbar ist. Die weitere Umwicklungsmaterialrolle kann mittels der Antriebsrolle antreibbar sein, indem die Antriebsrolle ihre Drehbewegung auf die mit ihr in Eingriff stehende weitere Umwicklungsmaterialrolle direkt überträgt. Die mit der Antriebsrolle verbundene Antriebseinrichtung kann mittels des Antriebsriemens derart beaufschlagt werden, dass die Antriebsrolle, insbesondere während der Einführungsphase, ein Antriebsmoment erfährt, sodass Umwicklungsmaterial von der Umwicklungsmaterialrolle und/oder das weitere Umwicklungsmaterial von der weiteren Umwicklungsmaterialrolle abgegeben wird und in die Presskammer führbar ist. Die mit der Antriebsrolle verbundene Antriebseinrichtung kann mittels des Bremsriemens derart beaufschlagt werden, dass die Antriebsrolle und/oder die Bremsrolle, insbesondere während der Wickelphase und/oder Trennphase, ein Bremsmoment erfahren, sodass das durch den Ballen mitgerissene bzw. mitgezogene Umwicklungsmaterial und/oder das weitere Umwicklungsmaterial gespannt wird und/oder eine Umwicklungsmaterialtrennung mit optimierter Umwicklungsmaterialspannung erfolgen kann. Durch den Antriebsriemen können somit in verschiedenen Betriebsstellungen für die Ballenwickelvorrichtung voneinander unabhängig einstellbare Antriebsmomente an der Antriebseinrichtung bzw. an der Antriebsrolle realisiert werden. Durch den Bremsriemen, insbesondere in Verbindung mit dem Antriebsriemen, können somit in verschiedenen Betriebsstellungen für die Ballenwickelvorrichtung voneinander unabhängig einstellbare Bremsmomente, insbesondere Antriebs- und Bremsmomente, an der Antriebseinrichtung bzw. an der Antriebsrolle und/oder Bremsrolle realisiert und/oder eine Optimierung der Straffung und/oder Entlastung und/oder Spannung des Umwicklungsmaterials ermöglicht werden, insbesondere eine ballenpressphasenabhängige Optimierung.

In Ausgestaltung der Erfindung umfasst die Antriebseinrichtung eine kombinierte Antriebs- und Bremstrommel, wobei die kombinierte Antriebs- und Bremstrommel drehfest mit der Antriebsrolle verbunden ist, sowie mit dem Antriebsriemen und mit dem Bremsriemen in Verbindung steht. Die Antriebs- und Bremstrommel kann dabei als einteilige Trommel oder Riemenscheibe mit zwei parallelen Riemenführungen, oder beispielsweise auch durch zwei miteinander drehfest verbundene Riemenscheiben ausgebildet sein. Über die drehfeste Verbindung der Antriebs- und Bremstrommel mit der Antriebsrolle kann letztere über den Antriebsriemen angetrieben und über den Bremsriemen gleichzeitig auch abgebremst werden, so dass sich eine variable Drehzahl der Antriebs- und Bremstrommel über eine einstellbare Eingriffswirkung von Antriebs- und Bremsriemen ergibt. Die Antriebseinrichtung kann aber auch nur eine Antriebtrommel aufweisen, wobei die Antriebstrommel drehfest mit der Antriebsrolle verbunden ist, sowie mit dem Antriebsriemen in Verbindung steht. Die Antriebstrommel kann dabei als Trommel oder Riemenscheibe mit einer Riemenführung ausgebildet sein. Über die drehfeste Verbindung der Antriebstrommel mit der Antriebsrolle kann letztere über den Antriebsriemen angetrieben werden, so dass sich eine variable Drehzahl der Antriebstrommel über eine einstellbare Eingriffswirkung des Antriebsriemens ergibt. Die Antriebseinrichtung kann ferner eine betätigbare und auf den Antriebsriemen wirkende Stellvorrichtung umfassen. Über die Stellvorrichtung kann eine Riemenspannung für den Antriebsriemen bereitgestellt werden, so dass der Antriebsriemen variabel in unterschiedliche Spannungszustände spannbar ist. Über den Spannungszustand des Antriebsriemens kann ein auf die Antriebs- und Bremstrommel wirkendes Antriebsmoment variabel eingeleitet werden. Des Weiteren kann die Antriebseinrichtung eine betätigbare und auf den Bremsriemen wirkende Spannvorrichtung umfassen. Über die Spannvorrichtung kann eine Riemenspannung für den Bremsriemen bereitgestellt werden, so dass der Bremsriemen variabel in unterschiedliche Spannungszustände spannbar ist. Über den Spannungszustand des Bremsriemens kann ein auf die Antriebs- und Bremstrommel wirkendes Bremsmoment variabel eingeleitet werden. Die auf den Antriebsriemen wirkende Stellvorrichtung und die auf den Bremsriemen wirkende Spannvorrichtung stehen vorzugsweise miteinander in Verbindung, wobei durch Betätigen der auf den Antriebsriemen wirkenden Stellvorrichtung die auf den Bremsriemen wirkende Spannvorrichtung betätigbar ist. Die Verbindung der Stellvorrichtung und Spannvorrichtung kann durch mechanische, hydraulische oder auch elektrische Stellmittel erfolgen, die in mechanischer Verbindung miteinander stehen. Es ist auch denkbar eine nicht-mechanische Verbindung zwischen der Stellvorrichtung und der Spannvorrichtung über elektronische Mittel herzustellen, so dass beispielsweise beide Vorrichtungen über jeweils voneinander mechanisch getrennte, jedoch elektronisch ansteuerbare Stellmittel betätigbar sind. Im Sinne einer Verbindung können die Stellvorrichtung und die Spannvorrichtung dann durch eine Steuereinheit miteinander in Verbindung stehen, so dass die Spannvorrichtung in Abhängigkeit von der Stellvorrichtung elektronisch angesteuert würde.

Die Erfindung betrifft weiter eine Rundballenpresse, insbesondere mit einer Ballenwickelvorrichtung nach einem der Ansprüche 1 bis 7. Die erfindungsgemässe Rundballenpresse weist die oben beschriebenen Vorteile der erfindungsgemässen Ballenwickelvorrichtung auf.

Die Erfindung betrifft weiter ein Verfahren zum Betreiben einer Rundballenpresse, insbesondere einer Rundballenpresse mit einer Ballenwickelvorrichtung nach einem der Ansprüche 1 bis 7. Die Bremseinrichtung wird mit der Trenneinrichtung derart betätigt, dass eine Drehbewegung der Bremsrolle mit der Bremseinrichtung gebremst wird, insbesondere auch eine Drehbewegung der mit der Bremsrolle in Eingriff stehenden Umwicklungsmaterialrolle mit der Bremsrolle gebremst wird. Eine Rundballenpresse mit oben genannter Ballenwickelvorrichtung wird vorzugsweise nach einem Verfahren betrieben, welches vorsieht, dass die Trenneinrichtung in einer Einführungsphase, in der das Umwicklungsmaterial der Presskammer zugeführt wird, und in einer Wickelphase, in der das Umwicklungsmaterial in der Presskammer um den Ballen gewickelt wird, in der inaktiven Trennposition ist und in einer Trennphase, in der das um den Rundballen gewickelte Umwicklungsmaterial durch die Trenneinrichtung von der Umwicklungsmaterialrolle getrennt wird, in die aktive Trennposition bewegt wird. Die Rundballenpresse kann weiter eine Fahrachse und eine Presskammer umfassen, in der ein Rundballen erzeugt wird. Das erfindungsgemässe Verfahren weist die oben beschriebenen Vorteile der erfindungsgemässen Ballenwickelvorrichtung und der erfindungsgemässen Rundballenpresse auf. Im Weiteren können die erfindungsgemässe Ballenwickelvorrichtung und die erfindungsgemässe Rundballenpresse bei der Durchführung des erfindungsgemässen Verfahrens verwendet werden.

Die erfindungsgemässe Ballenwickelvorrichtung oder die erfindungsgemässe Rundballenpresse können eine Steuereinheit umfassen. Das erfindungsgemässe Verfahren kann mit der Steuereinheit durchführbar sein. Die Rundballenpresse, bevorzugt die Ballenwickelvorrichtung und/oder der Aktuator der Trenneinrichtung und/oder die Stellvorrichtung und die Spannvorrichtung, können mit der Steuereinheit signalverbunden sein. Mit der Steuereinheit kann die Rundballenpresse, bevorzugt auch die Ballenwickelvorrichtung und/oder der Aktuator der Trenneinrichtung und/oder die Stellvorrichtung und die Spannvorrichtung, einstellbar und/oder verstellbar sein, d.h. diese können sind steuerbar und/oder regelbar. Die Steuereinheit (engl. ECU = electronic control unit oder ECM = electronic control module) kann ein elektronisches Modul und/oder ein eingebettetes System sein. Die Steuereinheit kann als Teil der Ballenwickelvorrichtung ausgebildet sein oder kann an der Rundballenpresse oder an einem Zugfahrzeug, durch welches die Rundballenpresse gezogen wird, bereits vorgesehen sein. Die Steuereinheit kann auch auf die Rundballenpresse und das Zugfahrzeug verteilt sein. Die Steuereinheit und die Ballenwickelvorrichtung, insbesondere der Aktuator der Trenneinrichtung und/oder die Stellvorrichtung und die Spannvorrichtung, können mittels eines Kabels oder Drahts oder aber drahtlos, also beispielsweise mittels Funk, miteinander verbunden werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung einer erfindungsgemässen Rundballenpresse mit einer erfindungsgemässen Ballenwickelvorrichtung, und
- Fig. 2: eine schematische Seitenansicht der Ballenwickelvorrichtung aus Figur 1 in einer aktiven Trennposition, und
- Fig. 3: eine schematische Seitenansicht der Ballenwickelvorrichtung aus Figur 1 in einer inaktiven Trennposition,

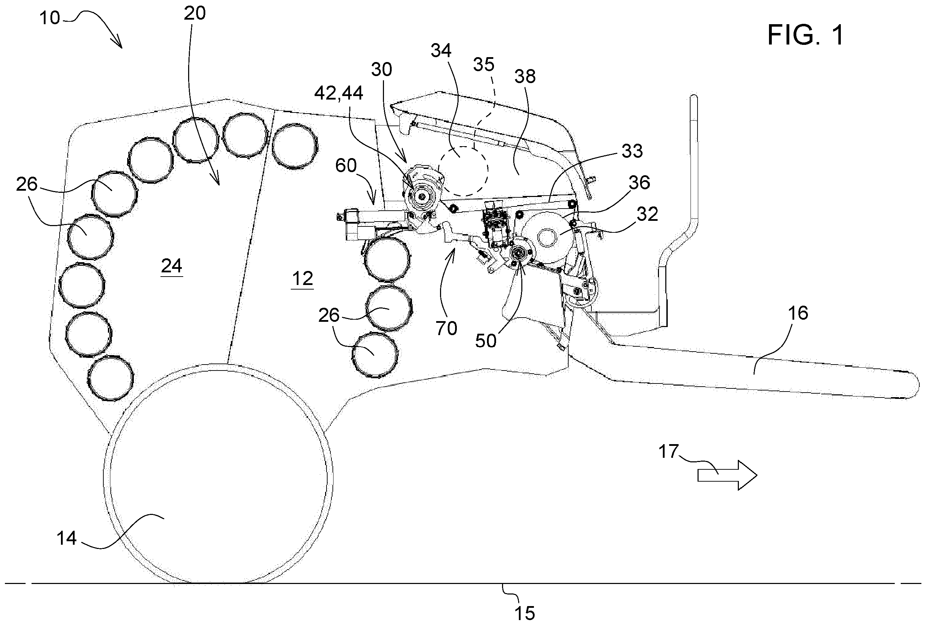

Figur 1 zeigt eine schematische Darstellung der erfindungsgemässen Rundballenpresse 10 mit einer erfindungsgemässen Ballenwickelvorrichtung 30. Die in Figur 1 dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper oder Traktor, anschließbar ist. An einer in Vorwärtsfahrtrichtung 17 vorderen unteren Seite des ersten Gehäuseteils 12 befindet sich in bekannter Weise eine Aufnahme- und Fördereinrichtung (nicht gezeigt) für Erntegut, wobei der erste Gehäuseteil 12 einen vorderen Teil einer Presskammer 20 umgibt. Am ersten Gehäuseteils 12, insbesondere am oberen Bereich des ersten Gehäuseteils 12, befindet sich ein Lager (nicht gezeigt) für ein schwenkbares zweites Gehäuseteil 24, das einen hinteren Teil der Presskammer 20 umgibt. Das zweite Gehäuseteil 24 gibt im geöffneten Zustand (nicht gezeigt) einen Auslass (nicht gezeigt) frei, durch welchen ein von der Rundballenpresse 10 gepresster Ballen (nicht gezeigt) abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt somit eine Auslassklappe für einen in der Presskammer 20 gepressten Ballen dar.

Die Rundballenpresse 10, mit größenunveränderlicher Presskammer 20 ausgebildet, enthält eine Vielzahl zueinander parallel verlaufender Presselemente zum Pressen von Erntegut in Form von Presswalzen 26 (exemplarisch wurden hier nur einige wenige Presswalzen 26 mit dem Bezugszeichen "26" versehen), deren Rotationsachsen bei geschlossenem zweiten Gehäuseteil 24 auf einem Kreisbogen gelegen sind, und von denen wenigstens einige angetrieben sind. Alternativ kann die Rundballenpresse 10 auch in bekannter Weise als solche mit einem größenveränderlicher Presskammer 20 bzw. als Rundballenpresse 10 mit variabler Presskammer 20 ausgebildet werden, wobei die Presselemente dann, ebenfalls in bekannter Weise, als Riemen, Gurte oder Kettenanordnungen (nicht gezeigt) ausgebildet sein können.

Ferner umfasst die Rundballenpresse 10 eine Ballenwickelvorrichtung 30, die mit einer Umwicklungsmaterialrolle 32 bestückt ist. Als Umwicklungsmaterial 33 kann bevorzugt eine Folie eingesetzt werden. Die Ballenwickelvorrichtung 30 kann ausserdem zusätzlich eine weitere Umwicklungsmaterialrolle 34 mit einem weiteren Umwicklungsmaterial 35 umfassen. Als weiteres Umwicklungsmaterial 35 kann bevorzugt eine Folie einer anderen Art oder ein Netz eingesetzt werden. Die Umwicklungsmateriarolle 32 kann in einem ersten Kompartiment 36 und die weitere Umwicklungsmaterialrolle 34 kann in einem zweiten Kompartiment 38 der Rundballenpresse 10, insbesondere der Ballenwickelvorrichtung 30 angeordnet sein. Das erste und zweite Kompartiment 36, 38 können voneinander beabstandet oder benachbart zueinander sein. Die Ballenwickelvorrichtung 30 umfasst ferner eine Zuführeinrichtung (nicht gezeigt) für das Umwicklungsmaterial, mittels welcher das Umwicklungsmaterial 33 von der Umwicklungsmaterialrolle 32 und/oder das weitere Umwicklungsmaterial 35 von der weiteren Umwicklungsmaterialrolle 34 in die Presskammer 20 geführt wird. Bevorzugt kann die Zuführeinrichtung entweder das Umwicklungsmaterial 33 von der Umwicklungsmaterialrolle 32 oder das weitere Umwicklungsmaterial 35 von der weiteren Umwicklungsmaterialrolle 34 in die Presskammer 20 führen.

Nachdem der eigentliche Pressvorgang, also die Erntegutaufnahme und Bildung eines Rundballens durch die Presswalzen 26, abgeschlossen ist, wird die Ballenwickelvorrichtung 30 aktiviert, und ein sich dem Pressvorgang anschließender Umwicklungsvorgang eingeleitet. Bei Einleiten eines Umwicklungsvorgangs wird in einer Einführungsphase durch eine mechanisch ausgelöste Zuführbewegung Umwicklungsmaterial und/oder weiteres Umwicklungsmaterial 33, 35 in Richtung der Presskammer 20 geführt, so dass ein freies Umwicklungsmaterialende mit dem sich in der Presskammer 20 rotierenden Rundballen in Berührung kommen kann und das Umwicklungsmaterial und/oder weiteres Umwicklungsmaterial 33, 35 mitgerissen und aufgenommen wird. Durch Rotation des Rundballens wird das Umwicklungsmaterial 33 und/oder das weitere Umwicklungsmaterial 35 in einer Wickelphase in einer oder mehreren Lagen um den Umfang des Rundballens gewickelt. Der Umwicklungsvorgang wird mit einer Trennphase, in der das um den Rundballen gewickelte Umwicklungsmaterial 33 von der Umwicklungsmaterialrolle 32 und/oder das weitere Umwicklungsmaterial 35 von der weiteren Umwicklungsmaterialrolle 34 durch eine Trenneinrichtung 60 getrennt wird, abgeschlossen.

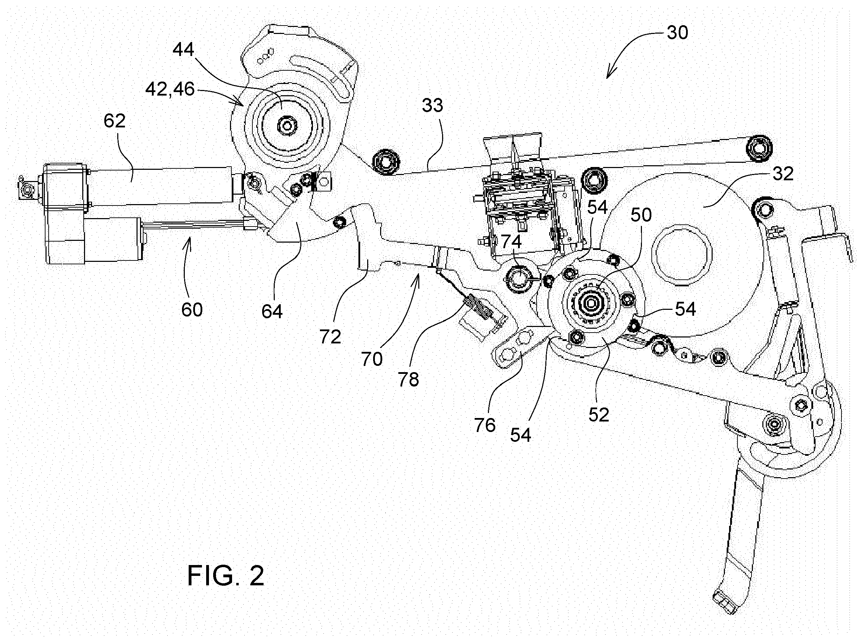

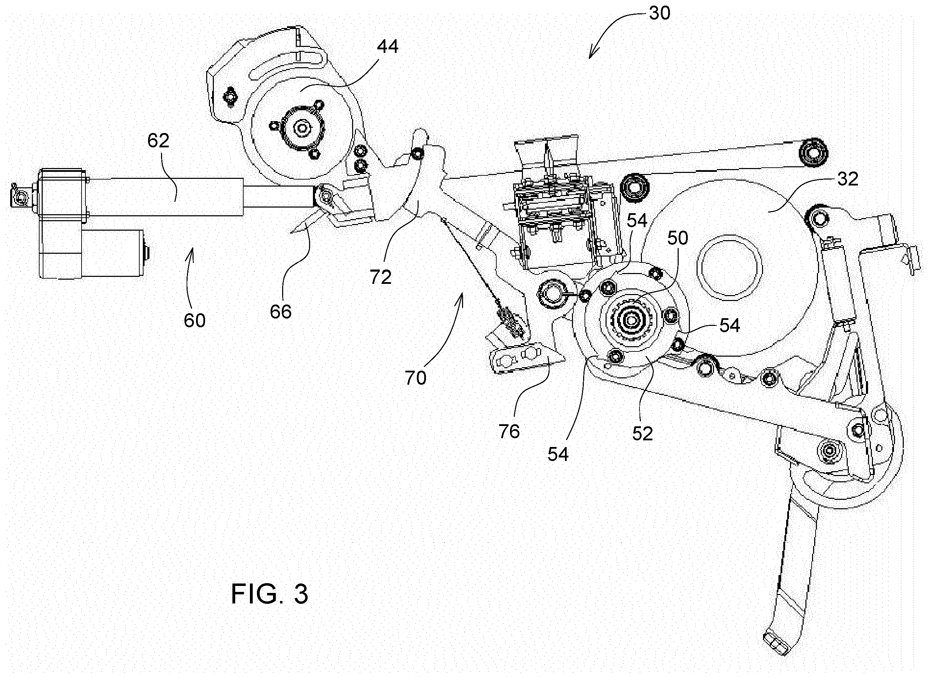

Die in den Figuren 2 und 3 gezeigten schematischen Seitenansichten der Ballenwickelvorrichtung 30 entsprechen der in Figur 1 gezeigten Ballenwickelvorrichtung 30, sodass im Folgenden lediglich auf Details und/oder Unterschiede eingegangen wird. Die Ballenwickelvorrichtung 30 umfasst eine Antriebseinrichtung 42, die mit einer Antriebsrolle 44 verbunden ist. Die Antriebsrolle 44 kann mit der weiteren Umwicklungsmaterialrolle 34 in Eingriff, bzw. kann mit dieser in einem Reibschluss stehen. Die Antriebseinrichtung 42 umfasst ferner eine kombinierte Antriebs- und Bremstrommel 46, die sowohl mit einem variabel spannbaren Antriebsriemen (nicht gezeigt) als auch mit einem variabel spannbaren Bremsriemen (nicht gezeigt) in Verbindung steht. Die Antriebs- und Bremstrommel 46 ist drehfest mit der Antriebsrolle 44 verbunden und steht ferner mit dem Antriebsriemen und mit dem Bremsriemen in Verbindung.

Die Umwicklungsmaterialrolle 32 kann mit der Bremsrolle 50 in Eingriff, bzw. kann mit dieser in einem Reibschluss stehen. Darüber hinaus ist eine Bremseinrichtung 70 vorgesehen ist, die mit der Bremsrolle 50 zusammenwirkt, wobei die Bremseinrichtung 70 mittels der Trenneinrichtung 60 derart betätigbar ist, dass eine Drehbewegung der Bremsrolle 50 mit der Bremseinrichtung 70 bremsbar, insbesondere stoppbar und/oder blockierbar ist. Die Trenneinrichtung 60 umfasst einen Aktuator 62, der zwischen mindestens einer aktiven Trennposition (Figur 2) und einer inaktiven Trennposition (Figur 3) bewegbar ist sowie eine Messeranordnung 66 (siehe Figur 3). Die Bremseinrichtung 70 ist dabei mittels der Trenneinrichtung 60 derart betätigbar, insbesondere um einen Drehpunkt 74 schwenkbar, dass eine Drehbewegung der Bremsrolle 50 mit der Bremseinrichtung 70 bremsbar ist, insbesondere wenn die Trenneinrichtung 60 in der aktiven Trennposition ist bzw. in die aktive Trennposition bewegt wird. Die Bremseinrichtung 70 kann, damit diese mittels der Trenneinrichtung 60 betätigbar ist, an einem Drehpunkt 74 schwenkbar an der Rundballenpresse 10 bzw. der Ballenwickelvorrichtung 30 gelagert sein. Im Speziellen umfasst die Bremseinrichtung 70 einen betätigbaren Bremshebel 72, der um den Drehpunkt 74 schwenkbar an der Rundballenpresse 10 bzw. der Ballenwickelvorrichtung 30 gelagert ist. Der Bremshebel 72 umfasst an einem ersten Ende ein Bremselement 76, das als Anschlag ausgebildet und am Bremshebel 72 lösbar befestigt ist. An einem zweiten Ende ist der Bremshebel 72 mit der Trenneinrichtung 60 verbunden. Im Speziellen kann Aktuator 62 der Trenneinrichtung auch über ein Verbindungselement 64 mit dem Bremshebel 72 verbunden sein. Die Bremseinrichtung kann ausserdem ein Rückstellelement 78 umfassen. Ein zweites Ende des Bremshebels ist mit dem Aktuator verbunden.

Die Bremsrolle 50 umfasst eine Bremskupplung 52, die als Scheibe ausgebildet ist, ist drehfest mit der Bremsrolle 50 verbunden. Die Bremskupplung 52 umfasst ausserdem drei Betätigungselemente 54, die als Mitnehmer ausgebildet sind.

Die Betätigungselemente 54 sind mit dem Bremslement 76 greifbar. Dabei ist der Bremshebel 72 mittels der Trenneinrichtung 60, insbesondere dem Aktuator 62, derart betätigbar, dass das Bremselement 76 an dem Betätigungselement 54 anliegt.

## Patentansprüche

1. Ballenwickelvorrichtung für eine Rundballenpresse (10),
umfassend eine Umwicklungsmaterialrolle (32) mit dem Umwicklungsmaterial (33), wobei Umwicklungsmaterialrolle (32) mit einer Bremsrolle (50) in Eingriff bringbar ist, und einer Trenneinrichtung (60) zum Abtrennen des Umwicklungsmaterials (33) von der Umwicklungsmaterialrolle (32),
**dadurch gekennzeichnet, dass**
eine Bremseinrichtung (70) vorgesehen ist, die mit der Bremsrolle (50) zusammenwirkt, wobei die Bremseinrichtung (70) mittels der Trenneinrichtung (60) derart betätigbar ist, dass eine Drehbewegung der Bremsrolle (50) mit der Bremseinrichtung (70) bremsbar ist.

2. Ballenwickelvorrichtung nach Anspruch 1, **dadurch gekennzeichnet, dass** die Trenneinrichtung (60) zwischen mindestens einer aktiven Trennposition und einer inaktiven Trennposition bewegbar ist, und die Bremseinrichtung (70) mittels der Trenneinrichtung (60) derart betätigbar ist, dass eine Drehbewegung der Bremsrolle (50) mit der Bremseinrichtung (70) bremsbar ist, wenn die Trenneinrichtung (60) in der aktiven Trennposition ist.

3. Ballenwickelvorrichtung nach Anspruch 1 oder 2, **dadurch gekennzeichnet, dass** die Bremsrolle (50) eine Bremskupplung (52) umfasst, wobei die Bremskupplung (52) drehfest mit der Bremsrolle (50) verbunden ist, und die Bremseinrichtung (70) einen Bremshebel (72) umfasst, der mit der Trenneinrichtung (60) verbunden ist, wobei der Bremshebel (72) mittels der Trenneinrichtung (60) derart betätigbar ist, dass die Bremskupplung (52) mittels der Bremseinrichtung (70) bremsbar ist.

4. Ballenwickelvorrichtung nach mindestens einem der vorangehenden Ansprüche, **dadurch gekennzeichnet, dass** die Bremskupplung (52) mindestens ein Betätigungselement (54) umfasst, und an einem ersten Ende des Bremshebels (72) ein Bremselement (76) vorgesehen ist, mit dem das Betätigungselement (54) ergreifbar ist, wobei der Bremshebel (72) mittels der Trenneinrichtung (60) derart betätigbar ist, dass das Bremselement (76) an dem Betätigungselement (54) anliegt.

5. Ballenwickelvorrichtung nach mindestens einem der vorangehenden Ansprüche, **dadurch gekennzeichnet, dass** die Ballenwickelvorrichtung (30) einen Aktuator (62) umfasst, und die Bremseinrichtung (70) mittels des Aktuators (62) betätigbar ist.

6. Ballenwickelvorrichtung (30) nach mindestens einem der vorangehenden Ansprüche, **dadurch gekennzeichnet, dass** die Ballenwickelvorrichtung (30) eine Antriebsrolle (44) umfasst, die mit einer Antriebseinrichtung (42) verbunden ist.

7. Ballenwickelvorrichtung nach mindestens einem der vorangehenden Ansprüche, **dadurch gekennzeichnet, dass** die Antriebseinrichtung (42) eine kombinierte Antriebs- und Bremstrommel (46) umfasst, wobei die kombinierte Antriebs- und Bremstrommel (46) drehfest mit der Antriebsrolle (44) verbunden ist, sowie mit dem Antriebsriemen und mit dem Bremsriemen in Verbindung steht.

8. Rundballenpresse mit einer Ballenwickelvorrichtung (30) nach einem der Ansprüche 1 bis 7.

9. Verfahren zum Betreiben einer Rundballenpresse (10) mit einer Ballenwickelvorrichtung (30) nach einem der Ansprüche 1 bis 7, **dadurch gekennzeichnet, dass** die Bremseinrichtung (70) mit der Trenneinrichtung (60) derart betätigt wird, dass eine Drehbewegung der Bremsrolle (50) mit der Bremseinrichtung (70) und eine Drehbewegung der mit der Bremsrolle (50) in Eingriff stehenden Umwicklungsmaterialrolle (32) mit der Bremsrolle (50) gebremst wird.

## Claims

1. Bale wrapping device for a roundbaler (10), comprising a wrapping material roller (32) having the wrapping material (33), wherein the wrapping material roller (32) is able to be brought into engagement with a brake roller (50), and a cutting apparatus (60) for cutting off the wrapping material (33) from the wrapping material roller (32),
**characterized in that**
a brake apparatus (70) which cooperates with the brake roller (50) is provided, wherein the brake apparatus (70) is actuatable by means of the cutting apparatus (60) such that a rotational movement of the brake roller (50) is able to be braked by the brake apparatus (70).

2. Bale wrapping device according to Claim 1, **characterized in that** the cutting apparatus (60) is movable between at least an active cutting position and an inactive cutting position, and the brake apparatus (70) is actuatable by means of the cutting apparatus (60) such that a rotational movement of the brake roller (50) is able to be braked by the brake apparatus (70) when the cutting apparatus (60) is in the active cutting position.

3. Bale wrapping device according to Claim 1 or 2, **characterized in that** the brake roller (50) comprises a brake coupling (52), wherein the brake coupling (52) is connected fixedly in terms of rotation to the brake roller (50), and the brake apparatus (70) comprises a brake lever (72) which is connected to the cutting apparatus (60), wherein the brake lever (72) is actuatable by means of the cutting apparatus (60) such that the brake coupling (52) is able to be braked by means of the brake apparatus (70).

4. Bale wrapping device according to at least one of the preceding claims, **characterized in that** the brake coupling (52) comprises at least one actuating element (54), and a brake element (76) is provided at a first end of the brake lever (72), the actuating element (54) being able to be gripped thereby, wherein the brake lever (72) is actuatable by means of the cutting apparatus (60) such that the brake element (76) bears against the actuating element (54).

5. Bale wrapping device according to at least one of the preceding claims, **characterized in that** the bale wrapping device (30) comprises an actuator (62), and the brake apparatus (70) is actuatable by means of the actuator (62).

6. Bale wrapping device (30) according to at least one of the preceding claims, **characterized in that** the bale wrapping device (30) comprises a drive roller (44) which is connected to a drive apparatus (42).

7. Bale wrapping device according to at least one of the preceding claims, **characterized in that** the drive apparatus (42) comprises a combined drive and brake drum (46), wherein the combined drive and brake drum (46) is connected fixedly in terms of rotation to the drive roller (44), and is connected to the drive belt and to the brake belt.

8. Roundbaler having a bale wrapping device (30) according to one of Claims 1 to 7.

9. Method for operating a roundbaler (10) having a bale wrapping device (30) according to one of Claims 1 to 7, **characterized in that** the brake apparatus (70) is actuated by the cutting apparatus (60) such that a rotational movement of the brake roller (50) is braked by the brake apparatus (70) and a rotational movement of the wrapping material roller (32) in engagement with the brake roller (50) is braked by the brake roller (50).

## Revendications

1. Dispositif d'enveloppement de balles pour une presse à balles rondes (10),
comprenant un rouleau de matériau d'enveloppement (32) avec le matériau d'enveloppement (33), le rouleau de matériau d'enveloppement (32) pouvant être mis en prise avec un rouleau de freinage (50), et un appareil de séparation (60) pour séparer le matériau d'enveloppement (33) du rouleau de matériau d'enveloppement (32),
**caractérisé en ce que**
un appareil de freinage (70) est prévu, qui coopère avec le rouleau de freinage (50), l'appareil de freinage (70) pouvant être actionné au moyen de l'appareil de séparation (60) de telle sorte qu'un mouvement de rotation du rouleau de freinage (50) peur être freiné avec l'appareil de freinage (70).

2. Dispositif d'enveloppement de balles selon la revendication 1, **caractérisé en ce que** l'appareil de séparation (60) peut être déplacé entre au moins une position de séparation active et une position de séparation inactive, et l'appareil de freinage (70) peut être actionné au moyen de l'appareil de séparation (60) de telle sorte qu'un mouvement de rotation du rouleau de freinage (50) peut être freiné avec l'appareil de freinage (70) lorsque l'appareil de séparation (60) est dans la position de séparation active.

3. Dispositif d'enveloppement de balles selon la revendication 1 ou 2, **caractérisé en ce que** le rouleau de freinage (50) comprend un accouplement de freinage (52), l'accouplement de freinage (52) étant relié au rouleau de freinage (50) de manière immobile en rotation, et l'appareil de freinage (70) comprend un levier de freinage (72) qui est relié à l'appareil de séparation (60), le levier de freinage (72) pouvant être actionné au moyen de l'appareil de séparation (60) de telle sorte que l'accouplement de freinage (52) peut être freiné au moyen de l'appareil de freinage (70).

4. Dispositif d'enveloppement de balles selon au moins l'une quelconque des revendications précédentes, **caractérisé en ce que** l'accouplement de freinage (52) comprend au moins un élément d'actionnement (54), et un élément de freinage (76) est prévu à une première extrémité du levier de freinage (72), avec lequel l'élément d'actionnement (54) peut être saisi, le levier de freinage (72) pouvant être actionné au moyen de l'appareil de séparation (60) de telle sorte que l'élément de freinage (76) s'applique contre l'élément d'actionnement (54).

5. Dispositif d'enveloppement de balles selon au moins l'une quelconque des revendications précédentes, **caractérisé en ce que** le dispositif d'enveloppement de balles (30) comprend un actionneur (62), et l'appareil de freinage (70) peut être actionné au moyen de l'actionneur (62).

6. Dispositif d'enveloppement de balles (30) selon au moins l'une quelconque des revendications précédentes, **caractérisé en ce que** le dispositif d'enveloppement de balles (30) comprend un rouleau d'entraînement (44) qui est relié à un appareil d'entraînement (42).

7. Dispositif d'enveloppement de balles selon au moins l'une quelconque des revendications précédentes, **caractérisé en ce que** l'appareil d'entraînement (42) comprend un tambour d'entraînement et de freinage combiné (46), le tambour d'entraînement et de freinage combiné (46) étant relié au rouleau d'entraînement (44) de manière immobile en rotation, et étant en liaison avec la courroie d'entraînement et avec la courroie de freinage.

8. Presse à balles rondes avec un dispositif d'enveloppement de balles (30) selon l'une quelconque des revendications 1 à 7.

9. Procédé pour exploiter une presse à balles rondes (10) avec un dispositif d'enveloppement de balles (30) selon l'une quelconque des revendications 1 à 7, **caractérisé en ce que** l'appareil de freinage (70) est actionné avec l'appareil de séparation (60) de telle sorte qu'un mouvement de rotation du rouleau de freinage (50) est freiné avec l'appareil de freinage (70) et un mouvement de rotation du rouleau de matériau d'enveloppement (32) en prise avec le rouleau de freinage (50) est freiné avec le rouleau de freinage (50).
